# EUROPÄISCHE PATENTSCHRIFT

(11) **EP 0 547 291 B1**
(45) Veröffentlichungstag und Bekanntmachung des Hinweises auf die Patenterteilung: **15.09.1999**
(21) Anmeldenummer: 92113408.6
(22) Anmeldetag: 06.08.1992
(51) Int. Cl.: B01D 27/08, F01M 11/03

(54) **Filter für Kraft- und/oder Schmierstoffe eines Verbrennungsmotors**
Fuel filter and/or lubricating oil filter for internal combustion engines
Filtre à carburant et/ou filtre à huile lubrifiante pour moteurs à combustion interne

(30) Priorität: 17.12.1991 DE 4141521
(43) Veröffentlichungstag der Anmeldung: 23.06.1993
(73) Patentinhaber: FILTERWERK MANN & HUMMEL GMBH, 71631 Ludwigsburg (DE)
(72) Erfinder: Habiger, Heinz, W-7140 Ludwigsburg (DE); Jainek, Herbert, W-7100 Heilbronn (DE); Oelpke, Reinhard, W-7120 Bietigheim-Bissingen (DE); Poldner, Erich, W-7141 Steinheim (DE)
(74) Vertreter: Voth, Gerhard, Dipl.-Ing.

(56) Entgegenhaltungen:
- EP-A- 0 044 539
- EP-A- 0 088 148
- AU-A- 411 288
- DE-A- 2 815 993
- DE-A- 3 013 762
- DE-A- 3 422 482
- DE-A- 3 429 634
- DE-A- 3 738 718
- DE-A- 3 838 720
- DE-A- 3 903 675
- DE-A- 4 036 551
- DE-B- 2 453 445
- DE-B- 2 460 073
- GB-A- 2 004 472
- NL-A- 7 114 039
- US-A- 4 186 099

## Beschreibung

Die Erfindung betrifft ein Filter für Kraft- und/oder Schmierstoffe eines Verbrennungsmotors.

Aus der DE-A-34 29 634 ist ein Filter für Kraft- und/oder Schmierstoffe bekannt. Dieses besteht aus einem, eine Filterpatrone aufnehmenden Gehäuse, welches mit einem Deckel verschlossen wird. Die Filterpatrone ist einerseits mit dem Deckel und andererseits mit dem Boden des Gehäuses durch jeweils eine Klebemittelschicht verbunden. Solche Filter müssen nach bestimmten Zeitintervallen ausgetauscht und durch ein neues Filter ersetzt werden.

Die Entsorgung solcher Filter, die auch unter dem Begriff Wechselfilter, insbesondere zur Filtrierung von öl eines Kraftfahrzeugs bekannt sind, bereitet zunehmend Schwierigkeiten.

Ein solches Filter besteht aus Elementen unterschiedlicher Werkstoffe, z.B. einem Blechgehäuse, einem Stahldeckel, einem Papierbalg sowie verschiedene Kunststoffteile. Außerdem enthält das Filter nach dem Gebrauch noch eine Restmenge an öl, die nicht aus dem Filter entfernt werden kann. Nachdem die Abfallverwertung Vorrang vor der herkömmlichen Abfallbeseitigung hat, sofern die Verwertung technisch möglich ist und die gewonnenen Stoffe wieder verwertbar sind, besteht die Notwendigkeit, solche Komplettfilter zu zerlegen und die Einzelteile getrennt zu entsorgen. Dieses Verfahren ist jedoch recht aufwendig, außerdem fallen erhebliche Mengen an Recycling-Material an.

Aus der US-A-4186099 ist ein Filterelement bekannt, dieses besteht aus einem Innenrohr, aus einem Außenrohr und einem dazwischen angeordnetem Filtereinsatz. Die Entsorgung des Filtereinsatzes ist nur nach erheblichem Demontageaufwand möglich.

Die EP-A-0088148 zeigt ein Filter insbesondere zum Aufarbeiten von Öl, bei dem eine zylindrische, auswechselbare Filterhülse vorgesehen ist. In die Filterhülse ist eine elastische Hülse einsteckbar, auch hier ist der Demontageaufwand zum Entsorgen der Filterhülse erheblich.

Aus der EP-A-0044539 ist ein Wechselfilterelement zu entnehmen. Dieses Wechselfilterelement ist mit einem Filtereinsatz versehen der nicht demontierbar ist und deshalb insgesamt mit Metallteilen und Kunststoff bzw. Zelluloseteilen entsorgt werden muß.
Die DE-A-3903675 beschreibt eine Ölfilter zum Reinigen von Schmieröl mit einem ringförmigen Filtereinsatz. Ein Nachteil bei diesem System besteht darin, daß der Filtereinsatz bei einem erhöhtem Differenzdruck zwischen Rohölseite und Reinölseite sich verformt und dadurch zerstört werden kann bzw. die Filterwirkung reduziert wird.

Es ist ferner aus der NL-A-7114039 eine Einrichtung mit einem austauschbaum Filtereinsatz bekannt; auch dort besteht der Nachteil, daß kein auf übliche Weise gestützter Filtereinsatz angewendet werden kann. Dieser Nachteil ist auch bei der Einrichtung gemäß der AU-A-411288 gegeben.

Der Erfindung liegt die Aufgabe zugrunde ein Filter zu schaffen, bei dem neben einer einfachen Austauschbarkeit des Filtereinsatzes auch das gesamte System demontagefreundlich und toleranzkompensierend aufgebaut ist.

Diese Aufgabe wird durch die Merkmale des unabhängigen Anspruchs 1 gelöst.

Der Grundgedanke dieser Erfindung ist die Möglichkeit, das Gehäuse wiederverschließbar zu öffnen, um somit den Filtereinsatz entfernen zu können und lediglich den Filtereinsatz, der im wesentlichen aus Filterpapier besteht, auszutauschen.

In einer Ausgestaltung der Erfindung ist vorgesehen, ein Stützrohr unmittelbar mit der Grundplatte oder dem Deckelteil zu verbinden. Auf dieses Stützrohr wird die Filterpatrone aufgeschoben. Es dient zum einen zur Lagefixierung des Filtereinsatzes und zum anderen als Stützelement des Filtereinsatzes bei Druckdifferenzen zwischen dem rohflüssigkeitsseitigen und dem reinflüssigkeitsseitigen Druck.

In vorteilhafter Weise ist die Grundplatte analog einer Wechselfiltergrundplatte ausgebildet. Dies hat den Vorteil, daß das Aufnahmeteil einer Wechselfilteraufnahme nicht modifiziert zu werden braucht, wenn anstelle eines Wechselfilters das erfindungsgemäße Filter zur Anwendung gelangt.

Gemäß einer Weiterbildung der Erfindung kann die lösbare Verbindung zwischen Deckelteil und Grundplatte ein einfaches Gewinde oder ein Bajonettverschluß sein. Sofern das am Deckelteil angeordnete Gewinde ein Innengewinde ist, kann dies auch zur einfacheren Herstellung entlang des Umfangs segmentartig gestaltet sein, dies bedeutet, daß nur bestimmte Segmentbereiche mit Gewinde versehen sind. Ein solches Gewinde ist bei einem Deckelteil, welches als Kunststoffspritzgußteil hergestellt wird, besonders vorteilhaft dadurch herzustellen, daß das Spritzgußwerkzeug einen konischen Schaft, der in das Innere des Deckelteils hineingreift, aufweist und an diesen konischen Schaft mit den Gewindestrukturen versehene Längsschieber angeordnet sind.

Beim Ausformen des Deckelteils wird zunächst der konische Schaft zurückgezogen und dann die Längsschieber nach innen bewegt, dadurch erfolgt die Freigabe des Deckelteils.

Eine Weiterbildung der Erfindung sieht vor, das Stützrohr an der Befestigungsseite mit einem Kragen zu versehen. Dieser Kragen ist in einer erhabenen Struktur ausgeführt, um ein Dichtelement für die, diesem Dichtelement zugewandten Endscheibe des Filtereinsatzes zu bilden. Dadurch läßt sich ein zusätzliches Abdichtelement, wie Dichtgummi , O-Ring oder ähnliches vermeiden. Bei vielen Filtern ist eine Flüssigkeits- bzw. Ölabflußbohrung wünschenswert, durch welche beim Herausnehmen des Filtereinsatzes das in dem Filtergehäuse noch befindliche öl abfließen kann. Selbstverständlich muß diese Ölabflußbohrung bei eingebautem Filtereinsatz dicht verschlossen sein. Gemäß einer weiteren Ausgestaltung der Erfindung ist hierfür die Endscheibe bzw. Stirnseite der Filterpatrone vorgesehen. Diese Endscheibe dichtet die Ölabflußbohrung ab. Sobald die Filterpatrone aus dem Gehäuse herausgenommen wird, gibt die Endscheibe diese Ölabflußbohrung frei.

In vorteilhafter Weise kann der Innenraum des Stützrohres für ein Bypassventil genutzt werden. Diesem Bypassventil kann ein Grobfilter in Form eines Siebkorbes oder einer Siebplatte vorgeschaltet sein. Dieses Grobfilter verhindert die Zufuhr sehr stark verunreinigter Rohflüssigkeit in den Reinflüssigkeitsbereich.

Bei verschiedenen Anwendungen ist das Filter hängend angeordnet, d.h. der Deckelteil zeigt annähernd in Richtung der Schwerkraftlinie. Bei dieser Anordnung ist es zweckmäßig, vor dem Öffnen des Filters das in dem Filter vorhandene Öl ablaufen zu lassen. Dies geschieht dadurch, daß an dem Deckelteil eine Ölablaßschraube angeordnet ist, die zunächst geöffnet werden muß und aus welcher das in dem Filter enthaltene Öl abfließen kann.

Weiterbildungsgemäß ist das an der Grundplatte angeordnete Dichtelement mit einem Schwallblech versehen. Dieses Schwallblech hat die Aufgabe, das einströmende Öl umzulenken, um eine Zerstörung des Filtereinsatzes an dieser Stelle durch den hohen öldruck sowie ein unerwünschtes Abheben der Filterpatrone von ihrem Dichtsitz zu vermeiden.

Das erfindungsgemäße Filter zeichnet sich auch dadurch aus, daß nicht nur das Deckelteil zum Austausch des Filtereinsatzes gelöst werden kann, sondern auch die Möglichkeit besteht, das gesamte Filter von einem Aufnahmeteil abzuschrauben, beispielsweise um ein defektes Teil auszutauschen. Damit bei dem Lösen des Deckelteils nicht das gesamte Filter von der Grundplatte mitgelöst wird, ist die Grundplatte an dem Aufnahmeteil selbsthemmend befestigt und kann nur unter Überwindung einer großen Kraft oder mittels eines Lösewerkzeuges von dem Aufnahmeteil gelöst werden.

Diese und weitere Merkmale von bevorzugten Weiterbildungen der Erfindung gehen außer aus den Ansprüchen auch aus der Beschreibung und den Zeichnungen hervor.

Ausführungsbeispiele der Erfindung sind in den Zeichnungen dargestellt und werden im folgenden näher erläutert. Es zeigen:
- Figur 1: einen Schnitt durch ein ölfilter mit entsorgbarer Patrone
- Figur 1-1: einen Schnitt durch ein Ölfilter mit entsorgarer Patrone
- Figur 2-1, 2-2: eine Variante eines ölfilters mit integriertem Siebfilterkorb
- Figur 3: eine weitere Variante mit integrierter Siebfilterplatte
- Figur 4: einen Teilschnitt durch ein Ölfilter
- Figur 5: einen Teilschnitt durch ein Ölfilter, mit Patronenzentrierung
- Figur 6: einen Schnitt durch ein öffenbares Wechselfilter
- Figur 6-1: einen Schnitt durch ein Öffenbares Wechselfilter
- Figur 7: einen Teilschnitt durch einen Ölfilter mit selbstdichtender Patrone
- Figur 8-1, 8-2: einen Schnitt und eine Draufsicht auf Gehäuseölfilterdeckel und Bajonettverschluß.

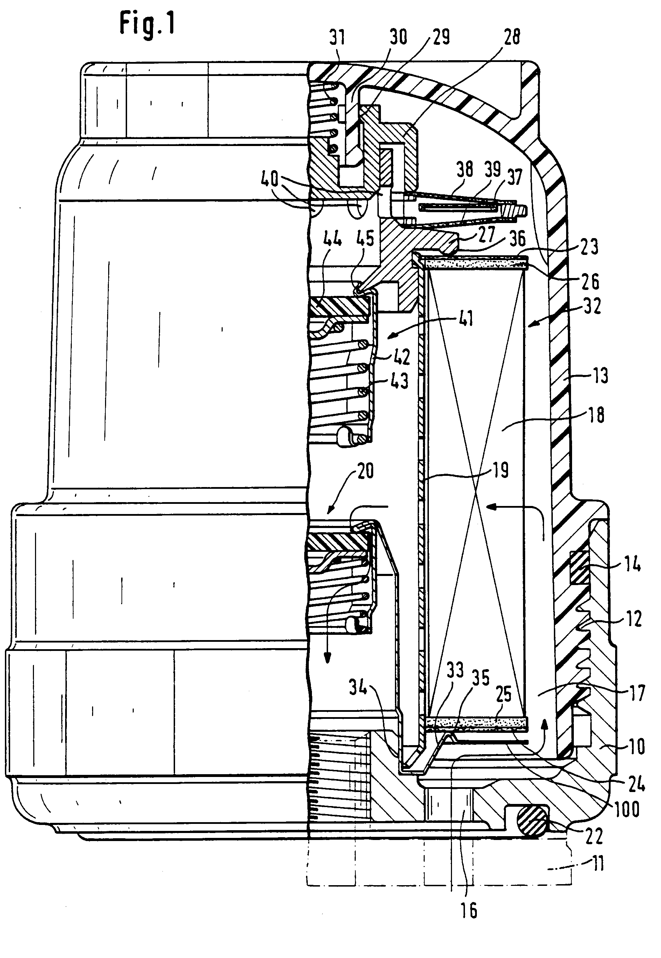

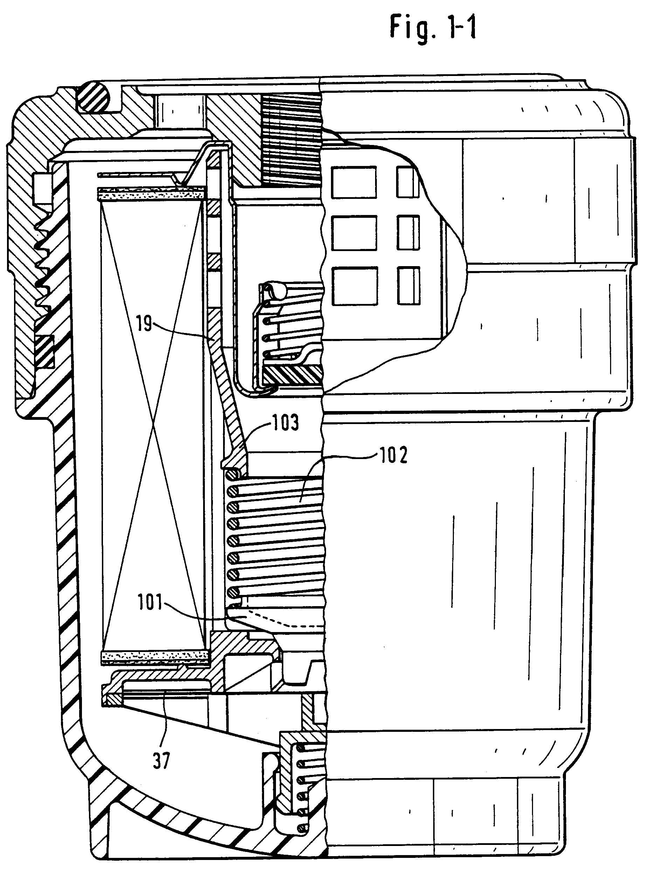

Die Figur 1 zeigt ein Ölfilter, wie es beispielsweise zur Reinigung von Motoröl in Kraftfahrzeugen angewendet wird. Das Ölfilter besteht aus einer Grundplatte 10, die an einem hier gestrichelt dargestellten Aufnahmeteil 11 angeschraubt ist. An dieser Grundplatte ist über ein Sägezahngewinde 12 der Deckel 13 des Filters angeschraubt. Zum Abdichten des gesamten Gehäuses ist am Auslauf des Gewindes 12 eine Dichtung 14 vorgesehen. Die Grundplatte 10 besteht beispielsweise aus Aluminium, der Deckel 13 ist ein Kunststoffspritzgußteil. Das zu reinigende öl strömt über die Bohrung 15 des Aufnahmeteils 11 und die Bohrung 16 der Grundplatte 10 in den Rohflüssigkeitsraum 17, durchströmt einen sternförmig gestalteten Filtereinsatz 18 und verläßt gereinigt über ein Stützrohr 19 und ein Rücklaufsperrventil 20 die Mittelbohrung 21 des Aufnahmeteils das Filter.

Zur Abdichtung des Rohflüssigkeitsraums zwischen Grundplatte und Aufnahmeteil gegegenüber der Umgebung ist ein Dichtelement 22 vorgesehen. Der Filtereinsatz 18 ist ein aus Papier oder Vlies zickzackförmig gefalteter Sternfiltereinsatz, welcher an den beiden Stirnseiten jeweils eine Endscheibe 23, 24, welche beispielsweise aus Pappe besteht, aufweist. Die Endscheiben sind über eine Klebeverbindung 25, 26 mit dem Filtereinsatz 18 verbunden. Der Filtereinsatz ist auf das Stützrohr 19 aufgeschoben. Dieses Stützrohr ist beispielsweise ein Lochblechrohr, welches auf einem Trägerteil 27 angebördelt ist. Das Trägerteil 27 ist mit einem Zwischenstück 28 fest verbunden. Das Zwischenstück 28 ist über eine Schnappverbindung 29 auf einen zylinderförmigen Ansatz 30 des Deckels 13 aufgesteckt, wobei eine Druckfeder 31, die sich einerseits auf dem Deckel 13 und andererseits auf dem Zwischenstück 28 abstützt eine Axialkraft auf das Trägerteil 27 ausübt, um die gesamte Filterpatrone 32 abdichtend zwischen dem Trägerteil 27 und einer Dichtplatte 33 zu halten.

Die Dichtplatte 33 ist ein Formblechteil, welches an einem zylinderförmigen Ansatz 34 der Grundplatte 10 befestigt ist. Diese Dichtplatte 33 dichtet unmittelbar mit ihrem Dichtrand 35 auf der Endscheibe 24 ab. Auf der gegenüberliegenden Seite der Filterpatrone 32 ist als Dichtelement ein umlaufender Dichtrand 36 des Trägerteils 27 vorgesehen. Auch dieser Dichtrand 36 stellt die Abdichtung unmittelbar mit der Endscheibe 23 her. Zwischen dem Trägerteil 27 und dem Zwischenstück 28 ist ein Siebscheibenfilter 37 mit Siebscheiben 38, 39 vorgesehen. Innerhalb des Siebscheibenfilters sind an dem Trägerteil 27 Bohrungen 40 angeordnet. Sollte der Durchflußwiderstand in der Filterpatrone 32 aufgrund völliger Verschmutzung zu stark ansteigen oder in kaltem Betriebszustand das zu reinigende öl in nicht ausreichendem Maße durch die Filterpatrone hindurchströmen, dann wird Öl über das Siebscheibenfilter 37, die Bohrungen 40 sowie einem Umgehungsventil 41 und das Rücklaufsperrventil 20 die Filterpatrone 32 umgehen können.

Das Umgehungsventil ist so eingestellt, daß es nur bei bestimmtem Differenzdruck zwischen Rohölseite und Reinölseite Öffnet. Dieser ist beispielsweise bei 2,5 bar eingestellt. Damit wird verhindert, daß auch im normalen Betriebszustand nur unvollständig gereinigte Flüssigkeit über das Siebscheibenfilter 37 in den Reinflüssigkeitsbereich gelangt.

Das Umgehungsventil 41 besteht aus einem Blechgehäuse 42, welches an das Trägerteil 27 angebördelt ist und in welchem eine Ventilfeder 43 einen Ventilteller 44 an den Ventilsitz 45 abdichtend andrückt.

Das Rücklaufsperrventil 20 ist in ähnlicher Weise aufgebaut, allerdings ist hier der öffnungsdruck wesentlich geringer. Er beträgt beispielsweise 0,1 bar. Dieses Rücklaufsperrventil hat die Aufgabe, bei Stillstand des Motors ein Leerlaufen der ölkanäle im Motor zu vermeiden.

Zum Austausch der Filterpatrone 32 wird der Deckel 13 von der Grundplatte 10 abgeschraubt. An dem abgenommenen Deckel 13 befindet sich das Trägerteil 27 sowie das Zwischenstück 28 und selbstverständlich auch das Stützrohr 19 mit der aufgeschobenen Filterpatrone 32. Die Filterpatrone kann von dem Stützrohr abgezogen werden und durch eine neue Filterpatrone ersetzt werden. Nach Austausch der Filterpatrone wird der Deckel 13 wieder auf die Grundplatte 10 aufgeschraubt. Die verbrauchte Filterpatrone 32 kann thermisch entsorgt werden. Durch die Anwendung von Endscheiben aus Pappe und die Verwendung von Filterpapier ist keine Auftrennung der einzelnen Bestandteile, wie dies bei Verwendung von metallischen Endscheiben erforderlich wäre, nötig.

In den weiteren Figuren sind ähnlich aufgebaute Filter dargestellt. Zur Vermeidung von Wiederholungen werden hier jeweils nur die wesentlichen und von den schon beschriebenen Ausführungsbeispielen abweichenden Merkmalen beschrieben.

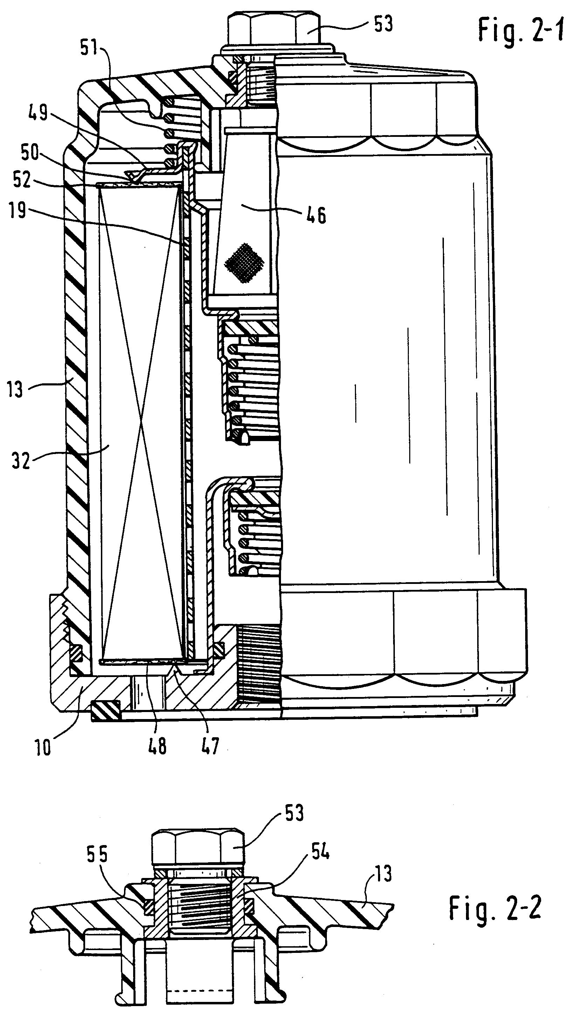

Die in Figur 2-1 gezeigte Variante eines ölfilters mit einer Grundplatte 10 und einem Deckel 13 enthält anstelle eines Siebscheibenfilters einen Siebkorb 46, der sich in das Stützrohr 19 erstreckt. Die Grundplatte ist mit einem umlaufenden Dichtrand 47 versehen. Auf diesem liegt die Endscheibe 48 der Filterpatrone 32 auf. An der gegenüberliegenden Seite der Filterpatrone 32 erfolgt eine Abdichtung mittels einer Dichtplatte 49. Diese Dichtplatte ist mit einem Dichtrand 50 versehen. Eine Druckfeder 51 übt auf die Dichtplatte 49 eine Kraft in Richtung der Filterpatrone aus, so daß eine zuverlässige Abdichtung der Endscheibe 52 an dem Dichtrand 50 gewährleistet ist. An dem Deckel 13 ist eine Ablaßschraube 53 vorgesehen. Das Filter wird normalerweise hängend eingebaut. Vor dem öffnen des Deckels kann diese Ablaßschraube 53 geöffnet werden und das in dem Filtergehäuse enthaltene öl zunächst ablaufen. Anschließend wird der Deckel von der Grundplatte 10 abgeschraubt. Die Filterpatrone 32 kann entnommen und durch eine neue ersetzt werden.

Figur 2-2 zeigt in einer Detaildarstellung die Ablaßschraube 53 an dem Deckel 13. Der Deckel 13, welcher aus Kunststoff besteht, ist mit einer Buchse 54 mit Sechskantbund versehen. Diese Buchse ist außen umgebördelt. Zur Abdichtung der Buchse an dem Deckel 13 ist eine Nut 55 angeordnet, in welche ein 0-Ring eingelegt ist. Die Ablaßschraube 53 kann selbstverständlich auch anstelle einer Sechskantschraube als Innensechskantschraube ausgebildet sein.

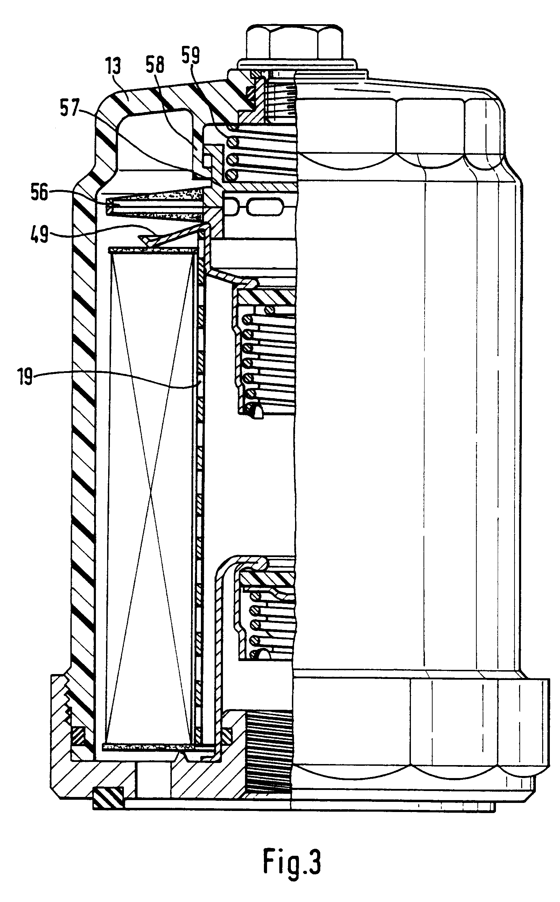

In Figur 3 ist eine weitere Variante eines ölfilters gezeigt. Bei diesem ist ein Siebscheibenfilter 56 ähnlich des Siebscheibenfilters in Figur 1 enthalten. Zur Erzeugung eines Anpreßdruckes auf die Dichtplatte 49 ist ein Zwischenelement 57 vorgesehen. Auf diesem Zwischenelement ist das Siebscheibenfilter 56 befestigt sowie die Dichtplatte 49 und das Stützrohr 19. Das Zwischenelement ist in einem zylindrischen Ansatz 58 des Deckels 13 eingerastet. Zwischen dem Deckel 13 und dem Zwischenelement 57 ist eine Druckfeder 59 angeordnet.

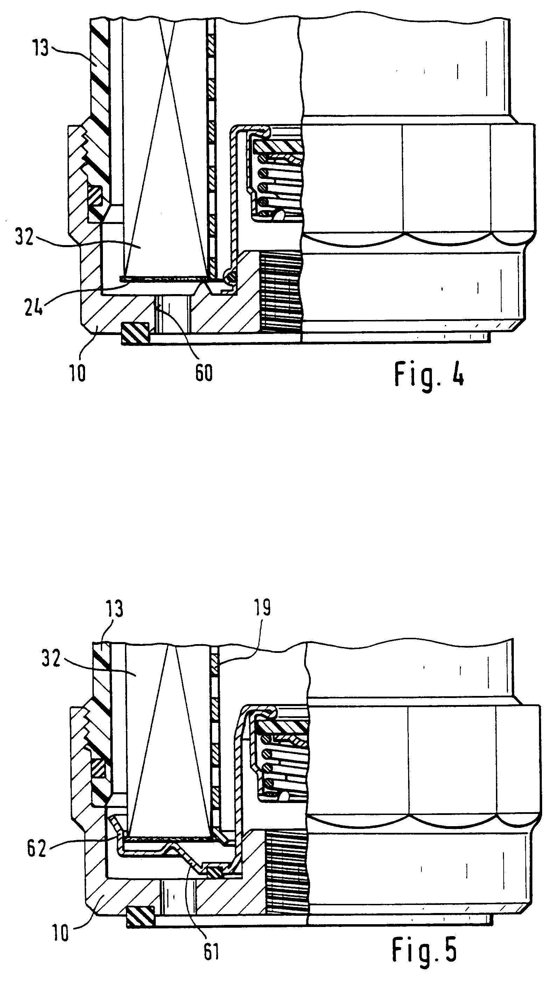

Der Detailschnitt gemäß Figur 4 eines ölfilters zeigt eine Filterpatrone 32, die mit ihrer Endscheibe 24 auf einer Öffnung 60 aufliegt. Diese öffnung ist eine ölablaßbohrung, durch welche das im Filtergehäuse befindliche öl beim Lösen des Deckels 13 der Grundplatte 10 abfließen kann. Während des normalen Filterbetriebs ist diese öffnung 60 durch die Endscheibe 24 verschlossen. Aufgrund der Dichtwirkung der Endscheibe 24 ist somit an dieser Stelle ein Ventil oder ein zusätzliches Dichtelement überflüssig. Die Öffnung 60 führt direkt in die ölwanne zurück, um ein ungehindertes Abfließen des öls zu ermöglichen.

Der Detailschnitt gemäß Figur 5 zeigt eine Filterpatrone 32, wobei in der Grundplatte 10 eine Dichtplatte 61 mit einem Zentrierrand 62 vorgesehen ist. Wie bereits erwähnt, wird beim Auswechseln der Filterpatrone 32 die neue Filterpatrone auf das Stützrohr 19 aufgeschoben und der Deckel 13 mit der neuen Filterpatrone 32 auf die Grundplatte 10 aufgeschraubt. Hierbei ist es zweckmäßig, wenn Filterpatrone 32 und Stützrohr 19 durch einen Zentrierrand 62 in die korrekte Einbaulage gebracht werden.

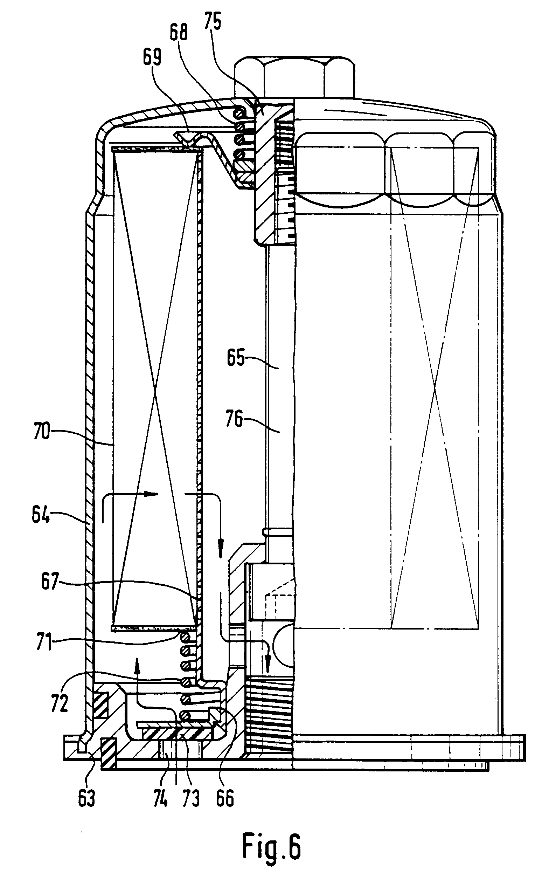

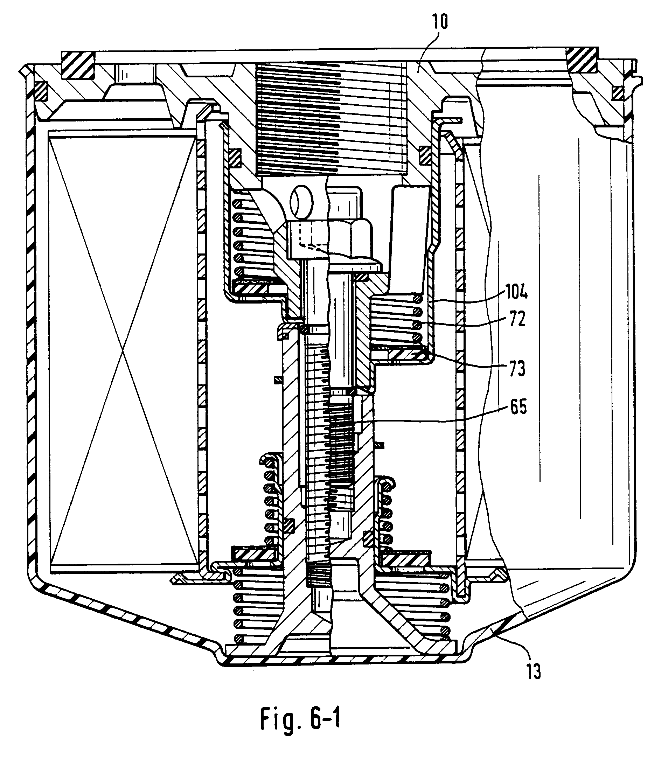

Figur 6 zeigt einen Schnitt durch einen öffenbaren Wechselfilter. Hier ist eine Grundplatte 63 vorgesehen, auf welcher ein Deckel 64 über eine Mittelverschraubung 65 befestigt ist. Auf der Grundplatte 63 ist an einem Ansatz 66 das Mittelrohr 67 befestigt. Auf dieses Mittelrohr ist die Filterpatrone 70 aufgeschoben. Aufgrund der Federkraft der Feder 68, welche auf die Dichtplatte 69 wirkt, wird die Filterpatrone 70 an die Dichtfläche 71 angepreßt. Unterhalb der Dichtfläche 71 ist eine Druckfeder 72 eingespannt. Diese bildet in Verbindung mit einer Ventilplatte 73 ein Rücklaufsperrventil für die Zuflußbohrung 74. An der Oberseite des Deckels 64 ist ein Gewindeansatzstück 75 vorgesehen. In dieses Gewindeansatzstück 75 ist eine Mittelschraube 76 eingeschraubt.

Durch diese Mittelschraube wird der Deckel 64 an der Grundplatte 63 lösbar befestigt. Zum Austausch der Filterpatrone 70 wird das gesamte Filter mit der Grundplatte von einem hier nicht dargestellten Aufnahmeteil abgeschraubt, anschließend die Mittelschraube 76 gelöst und der Deckel 64 von der Grundplatte 63 abgehoben. Nun kann die Filterpatrone 70 entnommen und durch eine neue Filterpatrone ersetzt werden. Der Zusammenbau geschieht in umgekehrter Reihenfolge.

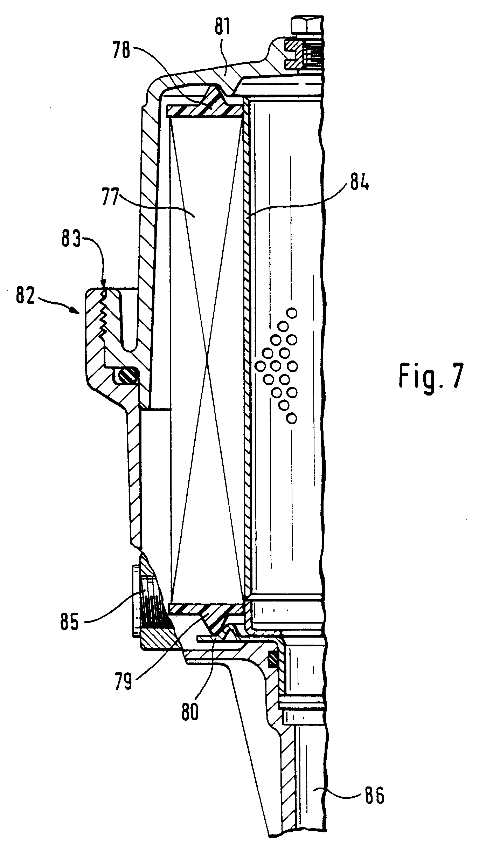

Das in Figur 7 dargestellte Filter ist ein Gehäusefilter mit einer metallfreien Filterpatrone 77, die mit Silikonendscheiben 78, 79 versehen ist. Im unteren Bereich des Filters liegt diese Endscheibe auf einem federnden Dichtelement 80 auf, während im oberen Bereich die Silikonendscheibe direkt an dem Deckel 81 des Filtergehäuses anliegt. Der Deckel 81 ist über eine Verschraubung 83 an dem Filtergehäuse 82 befestigt. Nach Entfernen des Deckels 81 kann die Filterpatrone 77 von dem Mittelrohr 84 abgezogen werden und durch eine neue Filterpatrone ersetzt werden. Bei dem hier gezeigten Filter ist der Rohöleinlaß 85 seitlich angeordnet, während der Reinölauslaß 86 eine Zentralbohrung ist.

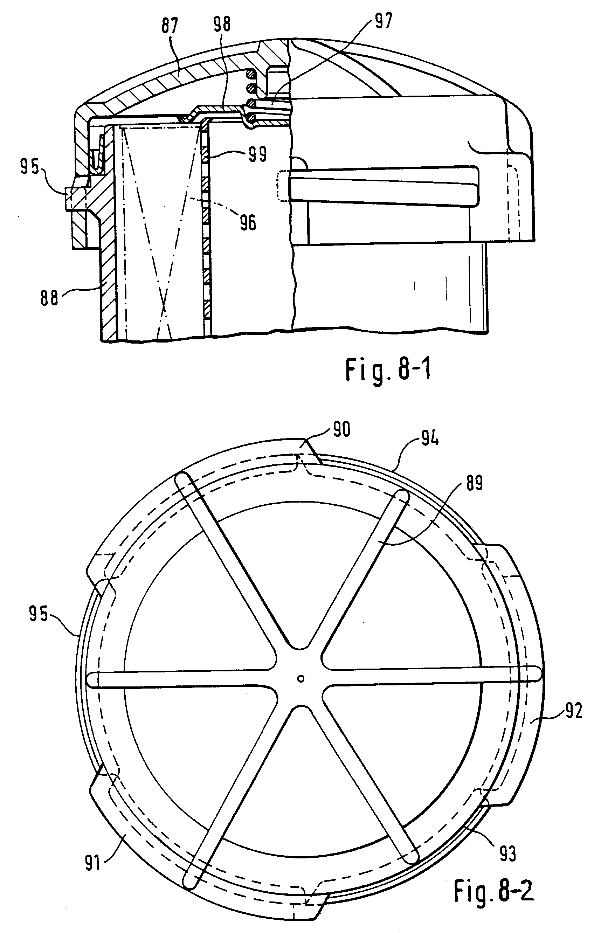

Figur 8-1 und 8-2 zeigt die Bajonettverschraubung eines Deckels 87 an einem Gehäuse 88. Bei Gehäuseölfiltern wird vielfach der Deckel an das Gehäuse angeschraubt. Zur einfacheren Handhabung ist es jedoch günstiger, anstelle einer Schraubverbindung eine Bajonettverbindung zu schaffen. Eine solche ist hier dargestellt. Der Deckel ist mit Griffelementen 89 versehen und weist drei, am Umfang verteilt angeordnete Ausnehmungen 90, 91, 92, auf. Beim Verschließen werden diese Ausnehmungen über die Bajonettsegmente 93, 94, 95 geschoben und der Deckel 87 durch eine 60°|-Drehung auf dem Gehäuse fixiert. Für die Abdichtung der innen liegenden Filterpatrone 96 sorgt eine Druckfeder 97 in Verbindung mit einer Abdichtscheibe 98. Die Filterpatrone 96 ist durch das Mittelrohr 99 in ihrer radialen Lage fixiert.

Zur Vermeidung der selbsttätigen Deckelablösung sind die Ausnehmungen und Bajonettsegmente in Löserichtung ansteigend angeordnet.

### Bezugszeichenliste

- 10: Grundplatte
- 11: Aufnahmeteil
- 12: Sägezahngewinde
- 13: Deckel
- 14: Dichtung
- 15: Bohrung
- 16: Bohrung
- 17: Rohflüssigkeitsraum
- 18: Filtereinsatz
- 19: Stützrohr
- 20: Rücklaufsperrventil
- 21: Mittelbohrung
- 22: Dichtelement
- 23: Endscheibe
- 24: Endscheibe
- 25: Klebeverbindung
- 26: Klebeverbindung
- 27: Trägerteil
- 28: Zwischenstück
- 29: Schnappverbindung
- 30: Ansatz
- 31: Druckfeder
- 32: Filterpatrone
- 33: Dichtplatte
- 34: Ansatz
- 35: Dichtrand
- 36: Dichtrand
- 37: Siebscheibenfilter
- 38: Siebscheibe
- 39: Siebscheibe
- 40: Bohrung
- 41: Umgehungsventil
- 42: Blechgehäuse
- 43: Ventilfeder
- 44: Ventilteller
- 45: Ventilsitz
- 46: Siebkorb
- 47: Dichtrand
- 48: Endscheibe
- 49: Dichtplatte
- 50: Dichtrand
- 51: Druckfeder
- 52: Endscheibe
- 53: Ablaßschraube
- 54: Buchse
- 55: Nut
- 56: Siebscheibenfilter
- 57: Zwischenelement
- 58: Ansatz
- 59: Druckfeder
- 60: öffnung
- 61: Dichtplatte
- 62: Zentrierrand
- 63: Grundplatte
- 64: Deckel
- 65: Mittelverschraubung
- 66: Ansatz
- 67: Mittelrohr
- 68: Feder
- 69: Dichtplatte
- 70: Filterpatrone
- 71: Dichtfläche
- 72: Druckfeder
- 73: Ventilplatte
- 74: Zuflußbohrung
- 75: Gewindeansatzstück
- 76: Mittelschraube
- 77: Filterpatrone
- 78: Endscheibe
- 79: Endscheibe
- 80: Dichtelement
- 81: Deckel
- 82: Filtergehäuse
- 83: Verschraubung
- 84: Mittelrohr
- 85: Rohöleinlaß
- 86: Reinölauslaß
- 87: Deckel
- 88: Gehäuse
- 89: Griffelement
- 90: Ausnehmungen
- 91: Ausnehmungen
- 92: Ausnehmungen
- 93: Bajonettsegmente
- 94: Bajonettsegmente
- 95: Bajonettsegmente
- 96: Filterpatrone
- 97: Druckfeder
- 98: Abdichtscheibe
- 99: Mittelrohr
- 100: Schwallblech
- 101: Ventilkegel
- 102: Feder
- 103: Arretierhaken
- 104: Ventilkorb

## Patentansprüche

1. Filter für Kraft- und/oder Schmierstoff eines Verbrennungsmotors mit einem Gehäuse bestehend aus einer Grundplatte (10) und einem Deckelteil (13) und einem im Gehäuse angeordneten Filtereinsatz (18), wobei das Deckelteil (13) an der Grundplatte (10) lösbar befestigt ist und der Filtereinsatz (18) zwischen Grundplatte (10) und Deckelteil (13) auf einem Stützrohr (19) aufgeschoben und abstützend angeordnet und austauschbar ist, wobei das Stützrohr (19) über verbindende Elemente (27, 28) und mit einer Schnappverbindung (29) auf einen zylinderförmigen Ansatz (30) des Deckels (13) aufgesteckt ist.

2. Filter nach Anspruch 1, wobei der auf dem Stützrohr (19) aufgeschobenen zylinderförmigen Filtereinsatz (18) mit nichtmetallischen Endscheiben, versehen ist und ein Dichtelement (33) an der Grundplatte (10), vorgesehen ist in Kontakt mit einer Endscheibe des zylinderförmigen Filtereinsatzes (18) ist, und ein weiteres Dichtelement (36), vorgesehen ist welches mit der weiteren Endscheibe des zylinderförmigen Filtereinsatzes (18) in Kontakt ist.

3. Filter nach Anspruch 1, wobei die Grundplatte (10) an das Aufnahmeteil (11) einer Wechselfilteraufnahme anschraubbar ist.

4. Filter nach Anspruch 1 oder 2, wobei das Deckelteil (13) mittels eines Gewindes (12) oder eines Bajonettverschlusses mit der Grundplatte (10) verbunden ist.

5. Filter nach Anspruch 1, wobei der Filtereinsatz (18) ein auswaschbarer Siebfiltereinsatz ist.

6. Filter nach einem der vorhergehenden Ansprüche, wobei das Stützrohr (19) an der Befestigungsseite mit einem Kragen versehen ist, dieser Kragen als Dichtelement ausgebildet ist.

7. Deckelteil für ein Filter nach Anspruch 4, wobei das Deckelteil (13) ein Kunststoff-Spritzgußteil ist, welches Innengewindesegmente aufweist,

8. Filter nach einem der vorhergehenden Ansprüche, wobei die der Grundplatte (10) zugewandten Stirnseite des Filtereinsatzes (18) im eingebauten Zustand eine ölabflußbohrung (60) verschließt.

9. Filter nach einem der vorhergehenden Ansprüche, wobei innerhalb des Stützrohres (19) ein Bypassregelventil (41) angeordnet ist.

10. Filter nach dem vorhergehenden Anspruch, wobei vor dem Bypassventil (41) ein Grobfilter in Form eines Siebkorbes (46) oder Siebscheibe (38,39) angeordnet ist.

11. Filter nach einem der verhergehenden Ansprüche, wobei an dem Deckelteil (13) eine ölablaßschraube (53) angeordent ist.

12. Filter nach einem der vorhergehenden Ansprüche, wobei das an der Grundplatte (10) angeordnete Dichtelement mit einem Schwallblech (100) versehen ist.

13. Filter nach einem der vorhergehenden Ansprüche, wobei die Grundplatte (10) an dem Aufnahmeteil (11) selbsthemmend befestigt ist.

14. Filter nach Anspruch 9, wobei das Stützrohr (19) und die Siebscheibe (37) als Bauteileinheit so ausgebildet sind, daß im Stützrohr integriert ein Patronenumgehungsventil, bestehend aus Ventilkegel (101) und Druckfeder (102) angeordnet ist, das durch mehrere Arretierhaken (103) im Mittelrohr (19) gehalten wird.

15. Filter nach Anspruch 1 und 2, wobei das Deckelteil (13) durch eine Mittelverschraubung (65) mit der Grundplatte (10) verbunden ist.

16. Filter nach Anspruch 15, wobei ein rohölseitiges Rücklaufsperrventil, bestehend aus Ventilplatte (73) und Feder (72), an der Grundplatte (10) angebracht ist.

17. Filter nach Anspruch 15, wobei ein reinölseitiges Rücklaufsperrventil, bestehend aus Ventilkorb (104), Ventilplatte (73) und Feder (72), fest an der Grundplatte (10) angebracht ist.

18. Filter nach einem der vorhergehenden Ansprüche, wobei wenigstens eine Endscheibe des Filtereinsatzes aus einem elastischen Material, insbesondere Silicon besteht, dem Filtereinsatz Stabilität verleiht und welches ferner mit einem umlaufenden Dichtwulst versehen ist, welcher eine axial-elastische Abdichtung des Filtereinsatzes an Deckelteil und/oder Grundplatte bewirkt.

## Claims

1. Filter for fuel and/or lubricant of an internal combustion engine, having a housing comprising a base plate (10) and a cover member (13) and a filter element (18) disposed in the housing, the cover member (13) being detachably secured on the base plate (10), and the filter element (18) being slipped over a support pipe (19) and being supportingly disposed between base plate (10) and cover member (13) and being replaceable, the support pipe (19) being placed upon a cylindrical attachment (30) of the cover (13) via connecting elements (27, 28) and with a snap-fit connection (29).

2. Filter according to claim 1, wherein the cylindrical filter element (18), which has been slipped over the support pipe (19), is provided with non-metallic end plates, and a sealing element (33), which is in contact with one end plate of the cylindrical filter element (18), is provided on the base plate (10), and an additional sealing element (36) is provided, which is in contact with the other end plate of the cylindrical filter element (18).

3. Filter according to claim 1, wherein the base plate (10) is screw-connectable to the receiving part (11) of an interchangeable filter receiver.

4. Filter according to claim 1 or 2, wherein the cover member (13) is connected to the base plate (10) by means of a thread (12) or a bayonet-type fastener.

5. Filter according to claim 1, wherein the filter element (18) is a washable screen filter element.

6. Filter according to one of the preceding claims, wherein the support pipe (19) is provided with a collar on the securement side, this collar being configured as a sealing element.

7. Cover member for a filter according to claim 4, wherein the cover member (13) is an injection-moulded plastics material part which has internal threaded segments.

8. Filter according to one of the preceding claims, wherein the end face of the filter element (18) facing the base plate (10) closes an oil outlet bore (60) in the installed state.

9. Filter according to one of the preceding claims, wherein a bypass regulating valve (41) is disposed inside the support pipe (19).

10. Filter according to the preceding claim, wherein a coarse filter, in the form of a perforated basket (46) or a perforated disc (38, 39), is disposed upstream of the bypass valve (41).

11. Filter according to one of the preceding claims, wherein an oil drain plug (53) is disposed on the cover member (13).

12. Filter according to one of the preceding claims, wherein the sealing element, disposed on the base plate (10), is provided with a baffle plate (100).

13. Filter according to one of the preceding claims, wherein the base plate (10) is secured in a self-locking manner on the receiving part (11).

14. Filter according to claim 9, wherein the support pipe (19) and the strainer plate (37) are configured as a unit of construction parts so that a cartridge bypass valve, comprising valve cone (101) and compression spring (102), is incorporated in the support pipe and retained in the central pipe (19) by a plurality of locking hooks (103).

15. Filter according to claims 1 and 2, wherein the cover member (13) is connected to the base plate (10) by a central screw connection (65).

16. Filter according to claim 15, wherein a non-return valve, comprising valve plate (73) and spring (72), is mounted on the base plate (10) on the unfiltered oil side.

17. Filter according to claim 15, wherein a non-return valve, comprising valve cage (104), valve plate (73) and spring (72), is securedly mounted on the base plate (10) on the filtered oil side.

18. Filter according to one of the preceding claims, wherein at least one end plate of the filter element is formed from a resilient material, more especially silicone, which imparts stability to the filter element and which, furthermore, is provided with a circumferential sealing bead, which effects an axially resilient sealing of the filter element on the cover member and/or on the base plate.

## Revendications

1. Filtre pour carburant et/ou lubrifiant d'un moteur à combustion interne, comportant un carter constitué d'une plaque de base (10) et d'une partie formant couvercle (13) et d'une garniture filtrante (18) disposée dans le carter, la partie formant couvercle (13) étant fixée de façon désolidarisable sur la plaque de base (10) et la garniture de filtre (18) étant disposée en appui entre la plaque de base (10) et la partie formant couvercle (13), insérée sur un tube d'appui (19) et montée de façon à pouvoir être remplacée, le tube d'appui (19) étant inséré par des éléments de liaison (27, 28) et avec une liaison à encliquetage (29) sur un appendice (30) de forme cylindrique du couvercle (13).

2. Filtre selon la revendication 1, la garniture filtrante (18) cylindrique insérée sur le tube d'appui (19) étant dotée de disques d'extrémité non métalliques et un élément d'étanchéité (33) étant prévu sur la plaque de base (10) mis en contact avec un disque d'extrémité de la garniture filtrante (18) cylindrique, et un autre élément d'étanchéité (36) étant prévu, mis en contact avec le deuxième disque d'extrémité de la garniture filtrante (18) cylindrique.

3. Filtre selon la revendication 1, la plaque de base (10) pouvant être vissée sur la partie de réception (11) d'un logement de filtre remplaçable.

4. Filtre selon la revendication 1 ou 2,
caractérisé en ce que
la partie formant couvercle (13) est reliée à la plaque de base (10) au moyen d'un filetage (12) ou d'une fermeture à baïonnette.

5. Filtre selon la revendication 1, la garniture filtrante (18) est une garniture filtrante à tamis pouvant être nettoyée par lavage.

6. Filtre selon la revendication précédente, le tube d'appui (19) est doté sur le côté fixation d'une collerette, cette collerette étant réalisée sous forme d'élément d'étanchéité.

7. Partie formant couvercle pour un filtre selon la revendication 4, la partie formant couvercle (13) étant une pièce moulée par injection en matière plastique et présentant des segments à filetage intérieur.

8. Filtre selon l'une des revendications précédentes, la face frontale, tournée vers la plaque de base (10), de la garniture filtrante (18) obturant à l'état monté un perçage d'évacuation d'huile (60).

9. Filtre selon l'une des revendications précédentes, une soupape de régulation par dérivation (41) est montée à l'intérieur du tube d'appui (19).

10. Filtre selon la revendication précédente, un filtre grossier, réalisé sous la forme d'un panier à tamis (46) ou d'un disque à tamis (38, 39), est disposé devant la soupape de dérivation (41).

11. Filtre selon l'une des revendications précédentes, une vis d'évacuation d'huile (53) est disposée sur la partie formant couvercle (13).

12. Filtre selon l'une des revendications précédentes, l'élément d'étanchéité monté sur la plaque de base (10) étant pourvu d'une tôle anti-projections (100).

13. Filtre selon l'une des revendications précédentes, la plaque de base (10) étant fixée de façon autobloquante sur la partie logement (11).

14. Filtre selon la revendication (9), le tube d'appui (19) et la rondelle à tamis (37) étant réalisés sous la forme d'un ensemble de construction, en ce que dans le tube d'appui est intégrée une soupape de contournement de cartouche, constituée d'un cône de soupape (101) et d'un ressort de compression (102), maintenu dans le tube central (19) d'une pluralité de crochets de fixation (103).

15. Filtre selon les revendications 1 et 2, la partie formant couvercle (13) étant reliée à la plaque de base (10) par un vissage central (65).

16. Filtre selon la revendication 15, une soupape antiretour située du côté de l'huile non filtrée, constituée d'une plaque de valve (73) et d'un ressort (72), étant montée sur la plaque de base (10).

17. Filtre selon la revendication 15, une soupape antiretour située côté huile filtrée, constituée d'un panier de valve (104), d'une plaque de valve (73) et d'un ressort (72), étant montée rigidement sur la plaque de base (10).

18. Filtre selon l'une des revendications précédentes, au moins un disque d'extrémité de la garniture filtrante étant constitué d'un matériau élastique, en particulier de silicone, conférant à la garniture filtrante de la stabilité et pourvu en outre d'un bourrelet d'étanchéité périphérique , qui provoque un effet d'étanchéité axialélastique de la garniture filtrante sur la partie formant couvercle et/ou sur la plaque de base.
